(19) Europäisches Patentamt
European Patent Office
Office européen des brevets

(11) Publication number: **0 020 875**
**A1**

(12) # EUROPEAN PATENT APPLICATION

(21) Application number: **80101656.9**

(51) Int. Cl.³: **B 65 G 47/26**

(22) Date of filing: **27.03.80**

(30) Priority: **02.04.79 US 25891**

(43) Date of publication of application: **07.01.81**
**Bulletin 81/1**

(84) Designated Contracting States: **AT BE CH DE FR GB IT LU NL SE**

(71) Applicant: **Aidlin Automation, Inc., 2425 Atlantic Avenue, Brooklyn, N.Y. 11233 (US)**

(72) Inventor: **Aidlin, Stephen M., 934, Glenwood Road, West Hempstead, N.Y. 11374 (US)**
Inventor: **Tartakowsky, Michael, 63-60, 102nd Street, Rego Park, N.Y. 11374 (US)**

(74) Representative: **Bringmann, Wolfgang, Dipl.-Ing., Rheinallee 130, D-4000 Düsseldorf 11 (DE)**

(54) **Machine and method for vertical transportation of containers.**

(57) A platform (12) is connected to a frame (10), inclined to the horizontal at an angle, and is operable in a first position thereof below an unloading station for accepting the containers, movable subsequently to a second position spaced substantially above the first position for unloading the containers to a discharge station, and movable thereafter to return to the first position. Drive means (40) are provided for moving the platform (12) and control means (27, 28, 42, 44, 46) are connected to the platform (12) for controlling the operation thereof, which include detecting means (42, 44, 46) for sensing when at least one container has been loaded thereinto, and for thereafter commanding the drive means (40) to move the platform (12) from the first position to the second position. The frame (10) is formed with a substantially vertically disposed wall; guard means (24) restrain each container from tumbling against the wall and impacting thereon when the container is received by the platform (12).

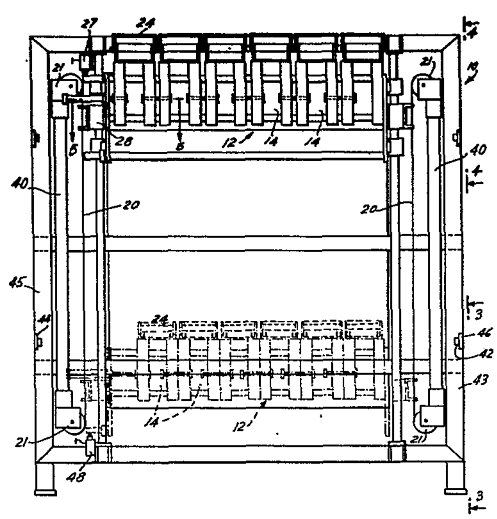

EP 0 020 875 A1

Machine and method for vertical transportation of containers.

The invention relates to a machine including a frame for cyclically receiving a plurality of articles from an unloading station, and for transporting them to a discharge station, wherein the discharge station is spaced apart from, and above the unloading station by a predetermined distance; the machine comprises a platform connected to the frame, which is inclined to the horizontal at an angle and is operable in a first position thereof below the unloading station for accepting the articles, which is subsequently movable to a second position spaced above the first position for unloading the articles to a discharge station, and is returnable thereafter to the first position. Drive means are provided for moving the platform from the first position to the second position and vice versa, and control means connected to the platform control the operation thereof. The control means including detecting means for sensing when at least one article has been loaded thereinto, and for thereafter commanding the drive means to move the platform from the first position to the second position.

Machines, or elevators of this type are especially suitable for transporting loads from an initial point to a second point which may be higher than the initial point. Thus from U.S. patent 4,047,625 issued to Grant, there is known a gravity roller conveyor in accordance with the prior art portion of claim 1 of the present invention. From U.S. patent 3,830,360 issued to Graff et al, there is also known an apparatus for transferring molded products to a trimming machine from a molding machine, where the containers discharged from the molding machine are in an upright, spaced-apart position, and are repositioned to a horizontal and differently spaced-apart position for feeding to the trimming machine. There is also known from U.S. patent 3,987,889 issued to Godoy a distributor mechanism for articles coming off a conveyor, where the articles are first engaged by a row of transfer blocks shiftable mounted on an elongate rod, from a first condition of the row of blocks, to a second condition, wherein the row of the blocks is stretched out along the elongate rod. From U.S. patent 3,724,637 issued to Strauss et al there is also known an apparatus for pick-up and transfer of containers from a Lehr conveyor upon which aligned rows of containers are advancing, to a cross conveyor disposed above the Lehr conveyor.

None of the afore-noted machines economically solve the problem of transferring a plurality of containers from an unloading station to a discharge station wherein the discharge station is located above the unloading station so as to restrain each container positioned at an angle from the horizontal from tumbling against a wall of the frame of the machine, and also to respace the containers from a first position assumed by them below the unloading station, to a second position required at the discharge station.

The present invention therefore offers the advantage of transferring containers arranged at a certain spacing, positioned at an angle from the horizontal, and arriving from a first apparatus at a first level to a second apparatus requiring a differing container spacing at a second level, without the risk of the container tumbling against a wall of the frame of the machine, and impacting thereon, when it is received by a platform of the machine.

One way of carrying out the invention is described in detail below with reference to the drawings which illustrate only one specific embodiment, in which:-

Fig. 1 shows a top plan view of the machine of the present invention, adjacent a discharge station;

Fig. 2 is an elevational view of the machine, according to the present invention, when viewed along the line 2-2 in Fig. 1;

Fig. 3 is a sideview of a portion of the machine, when the platform occupies a first, or lower position, as viewed along the line 3-3 of Fig. 2;

Fig. 4 is a side view of a portion of the machine, when the platform occupies a second, or upper, position, as viewed along line 4-4 of Fig. 2;

Fig. 5 is a plan view of a detail of the arrangement of the compartments when in the first, or lower, position;

Fig. 6 is a plan view of the detail of the arrangement of the compartments, when in the second, or upper, position; and

Fig. 7 is a cross-section along line 7-7 of Fig. 4.

Referring now to the drawings, there will be seen a frame of the machine 10, to which there is connected a platform 12, which includes a plurality of walls substantially forming individual compartments 14 for receiving containers 16 from an unloading station in the form of a chute 18. The platform 12 is arranged to travel along guide means, such as vertical bars 13, from a first position below the unloading station, when the platform 12 normally receives a plurality of containers 16, to a second position above a discharge station 22, by means of an endless cord 20, passing over pulleys 21. The discharge station 22, may, for example, be a machine for manufacturing flat-bottomed bottles, as disclosed in U.S. patent 4,132,584. The containers 16 are normally received by the platform 12 so that the longitudinal axis of a container 16 forms an acute angle with the horizontal, a guard 24 preventing the containers 16 from tumbling against a vertical wall 26, and impacting thereon. As the containers 16 travel from the first position upwardly to the second position, the vertical wall 26, having a predetermined height, separates the platform 12, and the containers 16 loaded therein, from the discharge station 22. When the platform 12, and therefore the containers 16 reach a level above that predetermined height, the containers 16 slide freely onto the discharge station 22 disposed therebelow. The platform 12 is arranged to shortly thereafter make contact with a switch 27 secured to the frame 10, which triggers the return motion of the platform 12 to its first position. The drive means for cyclically moving the platform 12 from the first position to the second position and vice versa are preferably pneumatic drive means in the form of, for example, a pneumatic or air cylinder 40. The machine will normally accommodate 6 compartments, although additional compartments can be arranged on the machine if necessary.

The unloading station 18 will not necessarily be matched to the discharge station 22, as far as spacing of the compartments 14 is concerned; for this reason it is advantageous to provide a mechanism which automatically matches the spacing of the containers 16 unloaded from the unloading station 18 to the spacing of the containers discharged at the discharge station 22. For example, in one particular implementation, the spacing between adjacent containers 16 in the unloading station 18 is 13.8 cm, while the spacing between adjacent containers 16 in the discharge station 22 is 15.25 cm. To accommodate such diversity of spacings, the mechanism of the present invention provides for the compartments 14 to be spaced along a row, and slidably linked by respective links 30. Each link 30 consists, for example, of a pair of blocks 32, each block 32 being secured to respective adjacent containers 14, and having formed therein a bore 34, a bolt 36 passing through bores 34 of the pair of blocks 32. The bolt 36 is secured with only one end thereof to one of the blocks 32, but passes freely through the other block 32, while being restrained from altogether becoming separated from that other block 32 by restraining means, such as a nut 38, so that two adjacent containers 16 can be spaced from one another, in the limit, by first and second distances, respectively, the second distance exceeding the first distance. The occurrence of these distances is arranged, for example, so that the compartments 14 are spaced from one another by the first distances, respectively, in their first or lower position, and by the second distances, in their second or upper position. Driver means, in the form, for example, of a pneumatic cylinder 28, secured to an end compartment 14, are arranged to cyclically pull the compartments 14 apart, and pull them together again, as best seen in Figs. 5 and 6.

The timing of the upward and downward motion of the platform 12 is accomplished by control means, which include a light source 42 arranged on one side 43 of the row of compartments 14 and external to the platform 12, for beaming a light beam to a reflector 44 arranged on the other side 45 of the row of compartments 14, which reflector 44, in turn is arranged to reflect the light beam to a photodetector 46 disposed in proximity to the light source 42, the photodetector 46 being arranged to receive the reflected light beam. In the absence of any containers 16 in the compartments 14, the photodetector 46 receives the unobstructed light beam reflected from the reflector 44, and provides an output signal; as soon as one or several containers 16 are loaded into respective compartments 14, the light beam is interrupted, and the photodetector 46 fails to provide an output signal. In the absence of such an output signal, the upward motion of the platform 12 is initiated. The control means further includes the switch disposed on the frame 10 in the vicinity of the second, or upper position of the platform 12, which control switch 27 is arranged to trigger the return, or downward motion of the platform 12, when the platform 12 contacts the switch 27. When the platform 12 returns to its first position on its downward motion from the second position, it is arranged to make contact with a switch 48, which commands the control means to trigger in turn a stroke of the cylinder 28 in a direction so as to push the compartments 14 towards one another, which compartments 14 then reassume their initial position.

The switches 27 and 48 thus additionally trigger the spreading apart and pushing towards one another motions of the compartments 14, which motions are accomplished by the pneumatic cylinder 28.

Claims

1. A machine including a frame (10) for cyclically receiving a plurality of articles (16) from an unloading station (18), and for transporting them to a discharge station (22), the discharge station (22) being spaced apart from, and above the unloading station (18) by a predetermined distance, comprising a platform (12) connected to the frame (10), inclined to the horizontal at an angle, and being operable in a first position thereof below the unloading station (18) for accepting the articles (16), being movable subsequently to a second position spaced substantially above the first position for unloading the articles (16) to the discharge station (22), and being movable thereafter to return to the first position, drive means (40) for moving the platform (12) from the first position to the second position, and vice--versa, and control means (27,28,42,44,46) connected to the platform (10) for controlling the operation thereof, including detecting means (42,44,46) for sensing when at least one article (16) has been loaded thereinto, and for thereafter commanding said drive means (40) to move the platform (12) from the first position to the second position, characterised in
the frame (10) being formed with a substantially vertically disposed wall (26), and wherein each article (16) is a container having a longitudinal axis subtending a predetermined angle with the horizontal, and guard means (24) restrain each container (16) from tumbling against the wall (26) and impacting thereon when the container (16) is received by the platform (12).

2. A machine according to claim 1, wherein said platform (12) includes a plurality of walls substantially forming individual compartments (14) for storing said containers (16) therein, said compartments (14) being spaced from one another at respective first distances at said first position, and at respective second distances at said second position, and further comprising driver means (28) arranged for automatically changing said first distances to said second distances, and vice versa.

3. A machine according to claim 2, wherein said containers (16) are substantially spaced equidistantly from one another at said first and second positions, respectively, and further comprising guide means (13) for moving said platform (12) from said first to said second position, and vice versa.

4. A machine according to claim 2, wherein said compartments (14) are disposed in a row, and wherein said driver means (28) comprises joining means (30) for linking respective adjacent compartments (14) for limiting relative motion of one compartment (14) with respect to an adjacent compartment (14), and reciprocally actuatable means connected to an end compartment (14) of said row of compartments (14), whereby a stroke in one direction of said driver means (28) pushes said compartments (14) towards one another so as to occupy said first respective distances, and a stroke in a direction opposite to said one direction pulls said compartments (14) away from one another so as to occupy said second respective distances.

5. A machine according to claim 1, further comprising sliding means for feeding said containers (16) to said discharge station (22) upon said containers (16) having reached said second position.

6. A machine according to claim 5, wherein said substantially vertically disposed wall (26) has a predetermined height normally separating the containers (16) loaded into said platform (12) from said discharge station (22), whereby, upon said containers (16) being moved by said platform (12) to a prearranged height above said predetermined height, said containers (16) are allowed to slide from their normally occupied position onto said discharge station (22).

7. A machine according to claim 1, wherein said control means (27,28,42,44,46) includes a first switch (27) disposed near said second position and actuatable by said platform (12) upon reaching said second position for triggering a return motion of said platform (12) to said first position.

8. A machine according to claim 4, wherein each of said second distances exceeds each of said first distances, and wherein said control means (27,28,42,44,46) further comprises a second switch (48) disposed near said first position, and actuatable by said platform (12) upon said platform (12) reaching said first position for triggering said driver means (28) to push said compartments (16) towards one another.

9. A machine according to claim 1, wherein said drive means (40) includes pneumatically operable means, wherein said unloading station (18) includes a chute, and said platform (12) is adapted to receive said containers (16) from said chute (18) in said first position.

10. A machine according to claim 1, wherein said platform (12) includes two sides (43,45) opposite one another, a loading area being defined within said two sides, and wherein said detecting means (42,44,46) includes a light source (42) disposed external to said loading area near one of said sides for emitting a light beam, a reflector (44) disposed near the other of said sides for reflecting said light beam towards said light source (42), and a photoelectric detector (46) disposed near said light source (42) for sensing the presence of the reflected light beam in the absence of said containers (16), whereby the absence of the reflected light beam triggers said drive means (40) to initiate the motion of said platform (12) from said first position to said second position.

11. In a method of cyclically receiving a plurality of containers from an unloading station by a machine including a frame formed with a substantially vertically disposed wall and a platform, and for transporting the containers to a discharge station, the steps comprising:

(a) unloading the containers from the unloading station to the platform,

(b) restraining each of said containers from tumbling against said wall and impacting thereon when being received by said platform,

(c) moving the loaded platform from a first position below the unloading station to a second position spaced substantially vertically above said first position, and near said discharge station,

(d) discharging the containers at the discharge station,

(e) thereafter returning the empty platform from the second position to the first position, and

(f) thereafter cyclically repeating steps (a) through (e) a desired number of said containers has been transported from the unloading station to the discharge station.

12. A method according to claim 11, wherein the platform includes individual compartments for storing the containers therein, the compartments being spaced from one another at respective first distances at the first position, and at respective second distances at said second position, and wherein step (c) includes the step of changing said first distances to said second distances, and wherein step (e) includes the step of changing said second distances to said first distances.

13. A method according to claim 12, wherein step (a) includes the step of photoelectrically determining the presence of at least one of said containers in said platform for triggering step (c), and wherein step (d) includes discharging the containers by gravity from the platform to the discharge station.

0020875



FIG.2

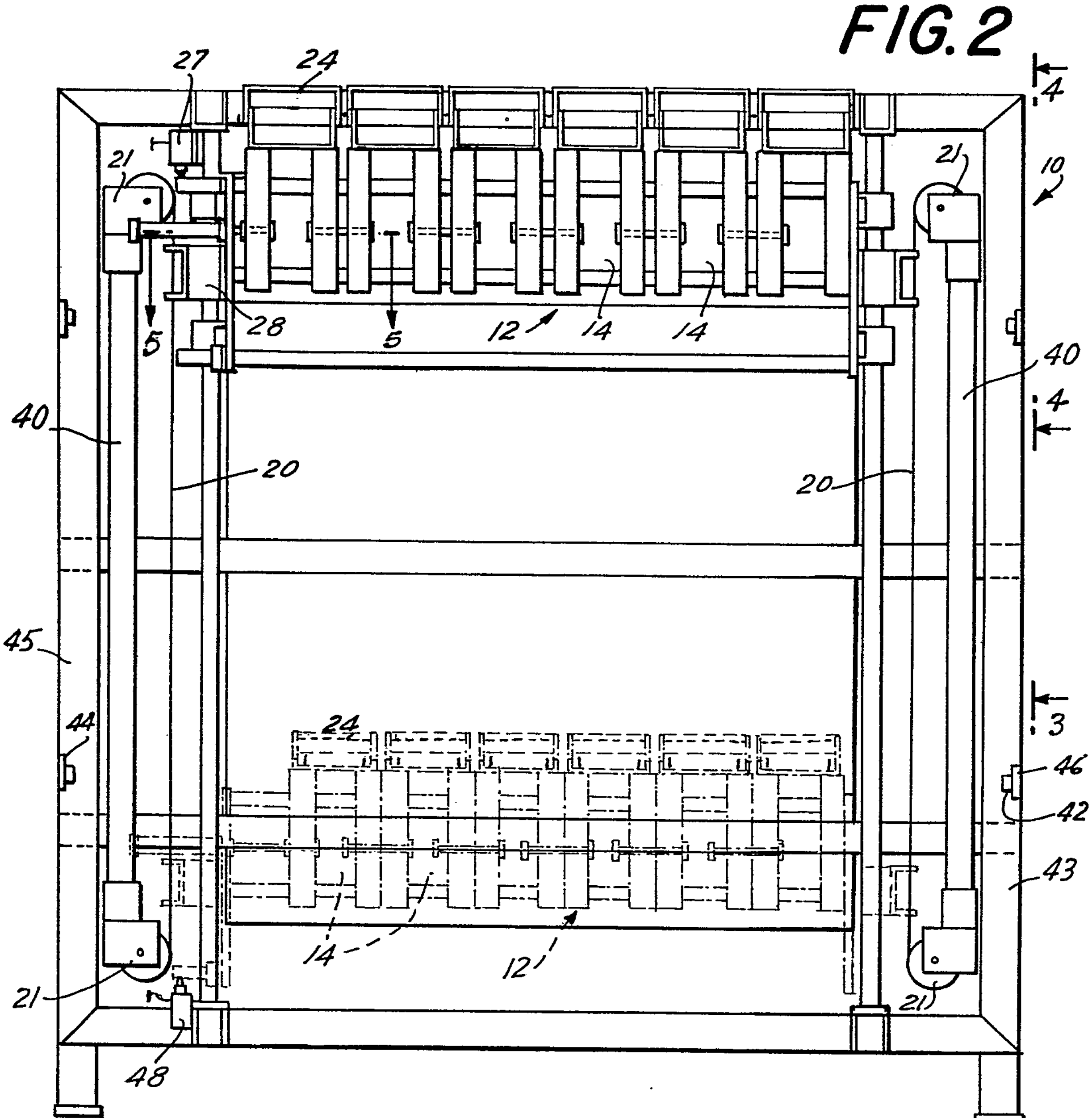


FIG.1

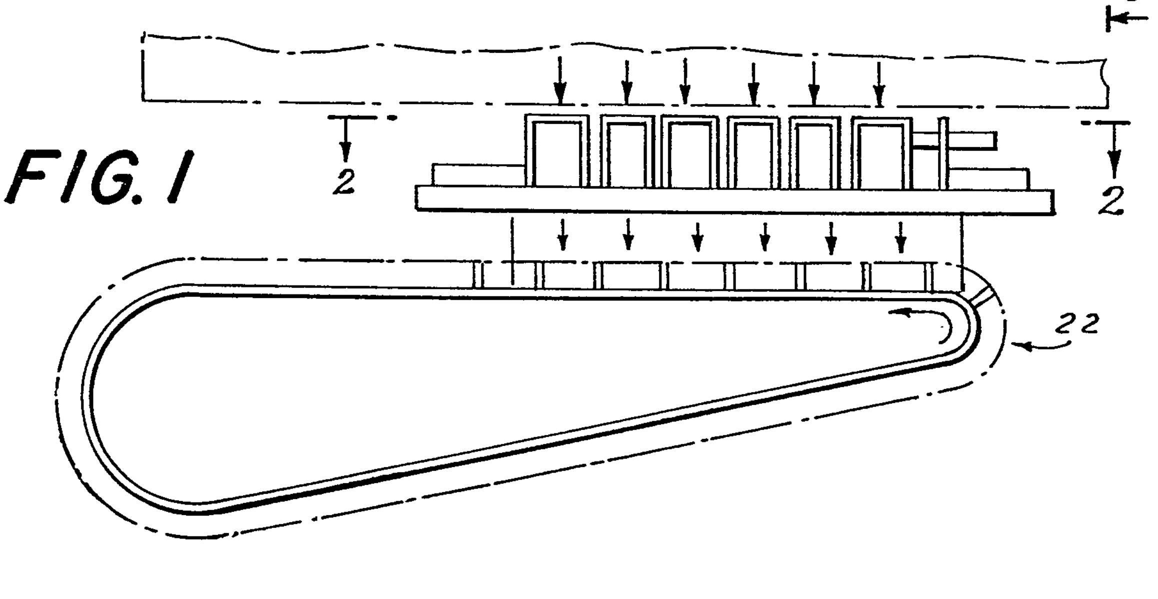

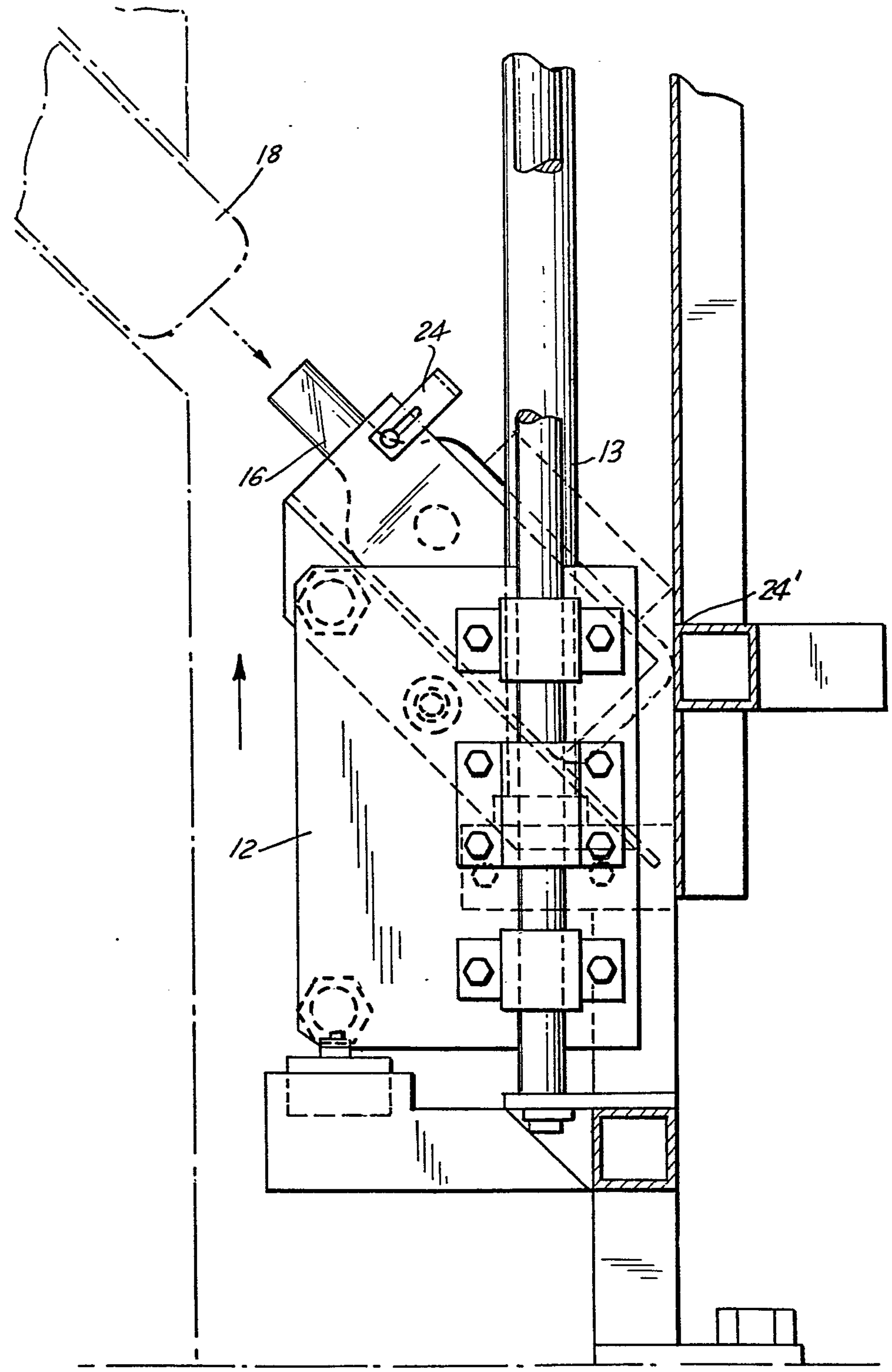


FIG. 3

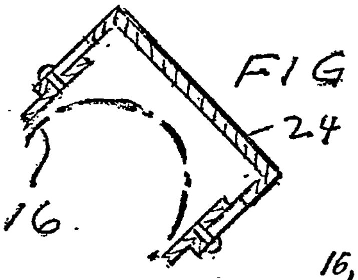


FIG. 7

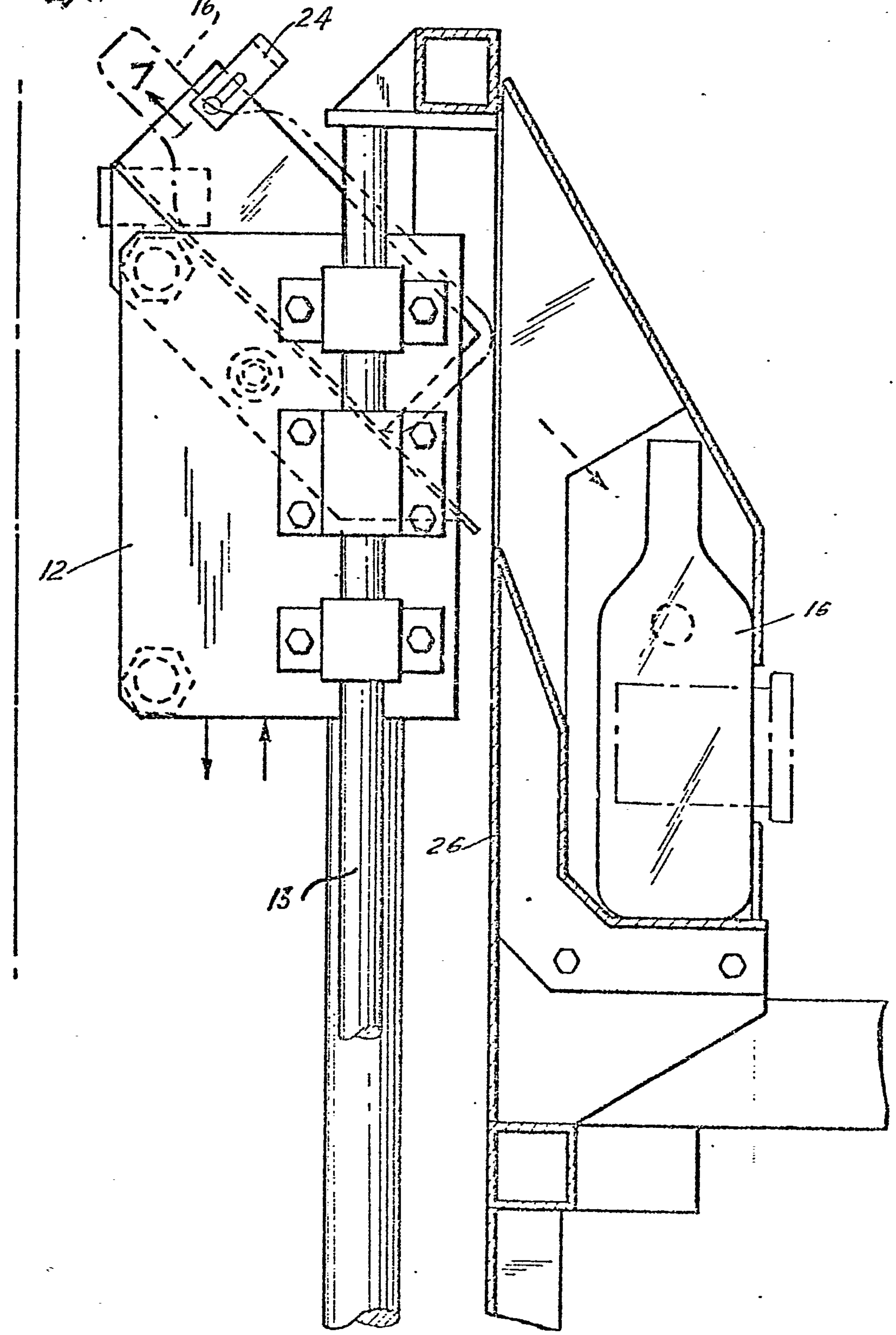


FIG. 4

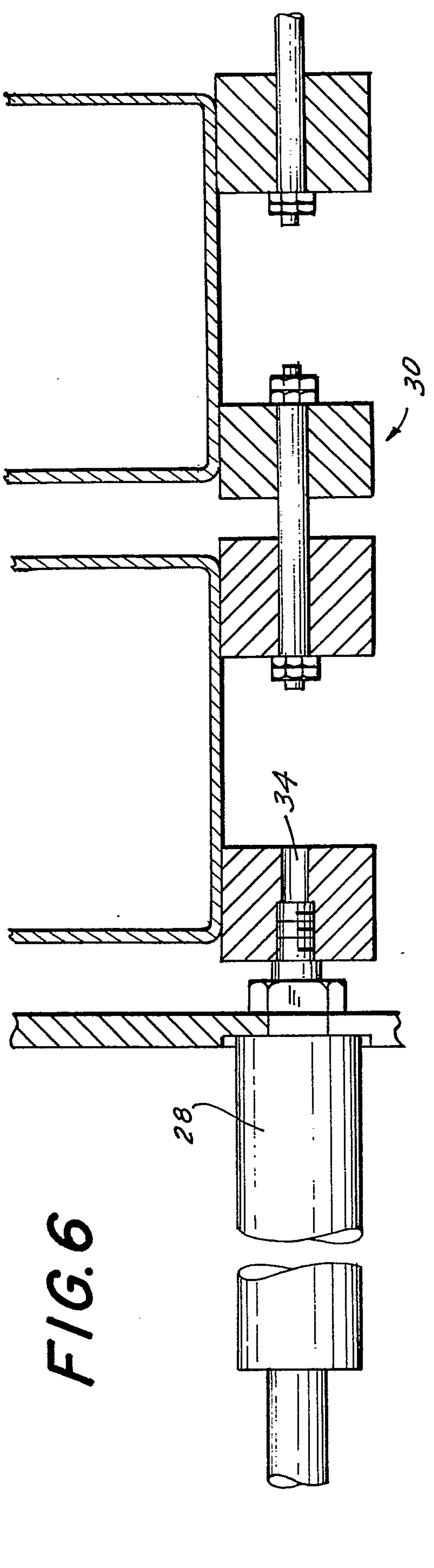


FIG.6

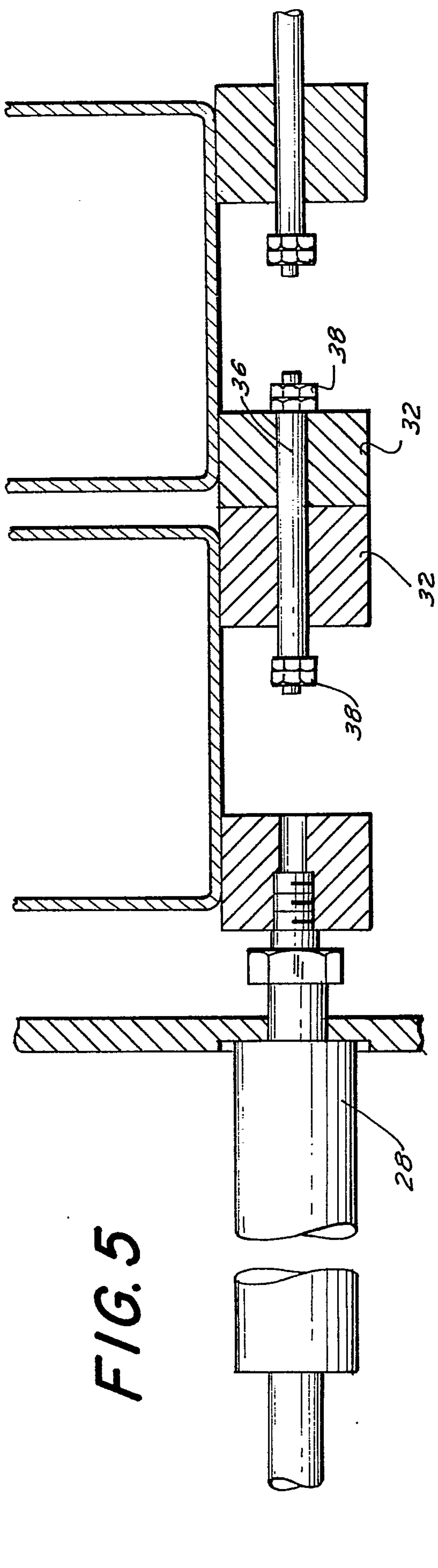


FIG.5

European Patent Office

# EUROPEAN SEARCH REPORT

0020875

Application number

EP 80101656.9

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| D | US - A - 3 724 637 (GLASS)<br>+ Totality +<br>-- | 1 | B 65 G 47/26 |
| D | US - A - 3 830 360 (HASKON)<br>+ Columns 3-6; fig. 1 +<br>-- | 1 | |
| D | US - A - 3 987 889 (AURORA)<br>+ Totality +<br>-- | 2,3 | |
| D | US - A - 4 047 625 (GRANT)<br>+ Columns 4-9; fig. 1 +<br>-- | 1,9 | TECHNICAL FIELDS SEARCHED (Int.Cl. 3) |
| D | US - A - 4 132 584 (AIDLIN)<br>+ Columns 2-4; fig. 1 +<br>-- | 1,9 | H 01 H 19/00<br>B 65 G 47/00<br>B 65 G 47/26<br>B 65 C 9/00<br>B 65 C 11/04<br>B 65 G 47/04<br>B 65 G 47/08<br>B 65 G 47/14<br>B 65 G 47/52<br>B 65 G 47/74 |
| A | DD - A - 124 289 (STRELOW)<br>+ Totality +<br>-- | 1-3 | |
| A | DE - A - 1 963 714 (SIDEL)<br>+ Pages 8-12; fig. 1 +<br>-- | 1,2 | |
| A | DE - A1 - 2 830 148 (KROOSS)<br>+ Pages 8-12; fig. 1 +<br>-- | 1,2 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | DE - A1 - 2 816 662 (ELI)<br>+ Pages 12-19; fig. 1,2 +<br>-- | 1,2 | |
| A | DE - B - 1 556 716 (BARRY)<br>+ Columns 3-10; fig. 1,2 +<br>-- | 1 | |
| X | The present search report has been drawn up for all claims | | &: member of the same patent family, corresponding document |

| Place of search | Date of completion of the search | Examiner |
|---|---|---|
| VIENNA | 25-06-1980 | BEDNAR |

EPO Form 1503.1 06.78

Europäisches Patentamt

# EUROPÄISCHER RECHERCHENBERICHT

0020875 Nummer der Anmeldung

EP 80101656.9

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| A | CH - A - 541 495 (TENSOR)<br>+ Totality +<br>-- | 1,2 | |
| A | CH - A - 611 575 (BOGATZKI)<br>+ Totality +<br>-- | 1,2 | |
| A | DE - A - 1 965 394 (BARRY)<br>+ Pages 7-15; fig. 1 +<br>-- | 1,2 | |
| A | DE - A1 - 2 822 823 (ERIKSSON)<br>+ Pages 14-27; fig. 1 +<br>-- | 1,2 | RECHERCHIERTE SACHGEBIETE (Int. Cl.³) |
| A | DE - A1 - 2 435 567 (JAGENBERG)<br>+ Totality +<br>---- | 1,2 | |